# EUROPEAN PATENT APPLICATION

(11) **EP 4 459 507 A1**
(43) Date of publication of application: **06.11.2024**
(21) Application number: 23171342.1
(22) Date of filing: 03.05.2023
(51) Int. Cl.: G06N 3/0464, G06N 3/049, G06N 3/084

(54) **METHOD FOR PROCESSING TIME SERIES BASED ON MACHINE LEARNING**

(71) Applicant: Siemens Aktiengesellschaft, 80333 München (DE)
(72) Inventor: Siegert, Leon, 28207 Bremen (DE); Grothmann, Ralph, 27356 Rotenburg (DE); Reimann, Thorsten, 91052 Erlangen (DE)
(74) Representative: Siemens Patent Attorneys

(57) **Abstract**

A method for processing, using a machine learning algorithm, at least one time series associated with a manufacturing process is provided. The at least one time series is obtained, e.g., from a database or one or more sensors associated with one or more machines for performing the manufacturing process. Convolution operations are applied to the at least one time series. The convolution operations comprise at least one convolution block and each of the at least one convolution block comprises a convolution layer connecting to a pooling layer. A global pooling layer is then applied to an output of the convolution operations. A linear operation block is applied to an output of the global pooling layer. The linear operation block comprises a linear operation layer connecting to an activation function. An estimate of at least one parameter associated with the manufacturing process is obtained based on an output of the linear operation block.

## Description

### TECHNICAL FIELD

Various examples of the disclosure generally pertain to a method for processing time series using a machine learning algorithm. Various examples of the disclosure specifically pertain to neural networks comprising convolution and pooling operations for processing at least one time series associated with a manufacturing process, e.g., a steel hardening process or a process of instant coffee production.

### BACKGROUND

Time series are used in statistics, signal processing, pattern recognition, econometrics, mathematical finance, weather forecasting, earthquake prediction, electroencephalography, control engineering, astronomy, communications engineering, and largely in any domain of applied science and engineering which involves temporal measurements.

Modeling of time series is used for forecasting, classification, or regression tasks where the input data is, often multivariate, time series. Which time series model is used for a specific task is chosen by the developer based on the properties of the time series. Existing time series processing methods, e.g., methods for recognition tasks, are commonly solved by time-delay recurrent neural networks such as Long-Short-Term-Memory (LSTM) models. Other methods to solve time series recognition tasks comprise other forms of recurrent neural networks, e.g. Elman or Jourdan models, transformers, 1D Convolutional Neural Networks, or non-Deep-Learning-based models such as auto-regressive, exponential smoothing, Kalman filters or moving-average models.

For some time series obtained from industrial manufacturing processes, e.g., measurements obtained by various sensors may have high complexity. In statistical modeling, complexity refers to a model having many degrees of freedom to fit the data. The high number of degrees of freedom is required for the model to be flexible enough to fit important events embedded in time series at any point along the time axis. Existing models distribute their degrees of freedom approximately equally over the time axis.

Consequently, some or many degrees of freedom may remain unused since they may fall into the large intervals of time series between the sparse, important events. Unused degrees of freedom may lead to overfitting or bias-variance dilemma. That is, the model learns features that are specific to single instances of time series instead of general features that hold for the entire population of the time series. Overfitting is an undesired effect in data modeling, e.g., time series modeling, since a model which is overfitting the data that it has been trained on will perform poorly on unseen data, e.g., the model may learn noise in the data instead of valuable structures. Consequently, the model cannot predict or estimate one or more parameters associated with a manufacturing process precisely based on one or more time series, e.g., time series obtained from one or more sensors associated with the manufacturing process.

### SUMMARY

Therefore, a need exists for advanced techniques for processing time series. Specifically, a need exists for processing time series to precisely predict one or more parameters associated with a manufacturing process.

This need is met by the features of the independent claims. The features of the dependent claims define embodiments.

A computer-implemented method for processing, using a machine learning algorithm, at least one time series associated with a manufacturing process is provided. The method comprises obtaining the at least one time series. The method further comprises applying convolution operations to the at least one time series. The convolution operations comprise at least one convolution block and each of the at least one convolution block comprises a convolution layer connecting to a pooling layer. The method also comprises applying a global pooling layer to an output of the convolution operations. The method further comprises applying a linear operation block to an output of the global pooling layer. The linear operation block comprises a linear operation layer connecting to an activation function. The method further comprises obtaining an estimate of at least one parameter associated with the manufacturing process based on an output of the linear operation block.

A computing device comprising a processor and a memory is provided. Upon loading and executing program code from the memory, the processor is configured to perform a method for processing, using a machine learning algorithm, at least one time series associated with a manufacturing process. The method comprises obtaining the at least one time series. The method further comprises applying convolution operations to the at least one time series. The convolution operations comprise at least one convolution block and each of the at least one convolution block comprises a convolution layer connecting to a pooling layer. The method also comprises applying a global pooling layer to an output of the convolution operations. The method further comprises applying a linear operation block to an output of the global pooling layer. The linear operation block comprises a linear operation layer connecting to an activation function. The method further comprises obtaining an estimate of at least one parameter associated with the manufacturing process based on an output of the linear operation block.

A computer program product or a computer program or a computer-readable storage medium including program code is provided. The program code can be executed by at least one processor. Executing the program code causes the at least one processor to perform a method for processing, using a machine learning algorithm, at least one time series associated with a manufacturing process. The method comprises obtaining the at least one time series. The method further comprises applying convolution operations to the at least one time series. The convolution operations comprise at least one convolution block and each of the at least one convolution block comprises a convolution layer connecting to a pooling layer. The method also comprises applying a global pooling layer to an output of the convolution operations. The method further comprises applying a linear operation block to an output of the global pooling layer. The linear operation block comprises a linear operation layer connecting to an activation function. The method further comprises obtaining an estimate of at least one parameter associated with the manufacturing process based on an output of the linear operation block.

It is to be understood that the features mentioned above and those yet to be explained below may be used not only in the respective combinations indicated, but also in other combinations or in isolation without departing from the scope of the invention.

### BRIEF DESCRIPTION OF THE DRAWINGS

- FIG 1: schematically illustrates an exemplary system for a manufacturing process according to various examples.
- FIG 2: schematically illustrates a block diagram of a computing device according to various examples.
- FIG 3: is a flowchart of a method according to various examples.
- FIG 4: is a flowchart of an exemplary architecture of a machine learning algorithm according to various examples.

### DETAILED DESCRIPTION OF THE DRAWINGS

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Various examples of the disclosure generally pertain to a method for processing, using a machine learning algorithm, at least one time series associated with a manufacturing process. The at least one time series is obtained, e.g., from a database or one or more sensors associated with one or more machines for performing the manufacturing process. Convolution operations are applied to the at least one time series. The convolution operations comprise at least one convolution block and each of the at least one convolution block comprises a convolution layer connecting to a pooling layer. A global pooling layer is then applied to an output of the convolution operations. A linear operation block is applied to an output of the global pooling layer. The linear operation block comprises a linear operation layer connecting to an activation function. An estimate of at least one parameter associated with the manufacturing process is obtained based on an output of the linear operation block.

According to various examples, the at least one time series may be associated with a steel hardening process and the at least one parameter associated with the manufacturing process may comprise a grade of hardness of steel.

For example, the at least one time series may be associated with at least one of an actual carbon potential, a target carbon potential, an output voltage of an oxygen sensor, a temperature in a furnace zone, a temperature of the oxygen sensor, an atmosphere pressure, an actual batch runtime, a target batch runtime, and a carbon potential controller value.

In general, carbon potential is a measure of the capability of a furnace atmosphere to impart carbon into a steel during heat treatment. The carbon potential of an atmosphere is defined as the carbon content of a thin sheet of pure iron in equilibrium with the atmosphere. An oxygen sensor (or lambda sensor, where lambda refers to air-fuel equivalence ratio) or probe, is an electronic device that measures the proportion of oxygen (02) in the gas or liquid being analyzed.

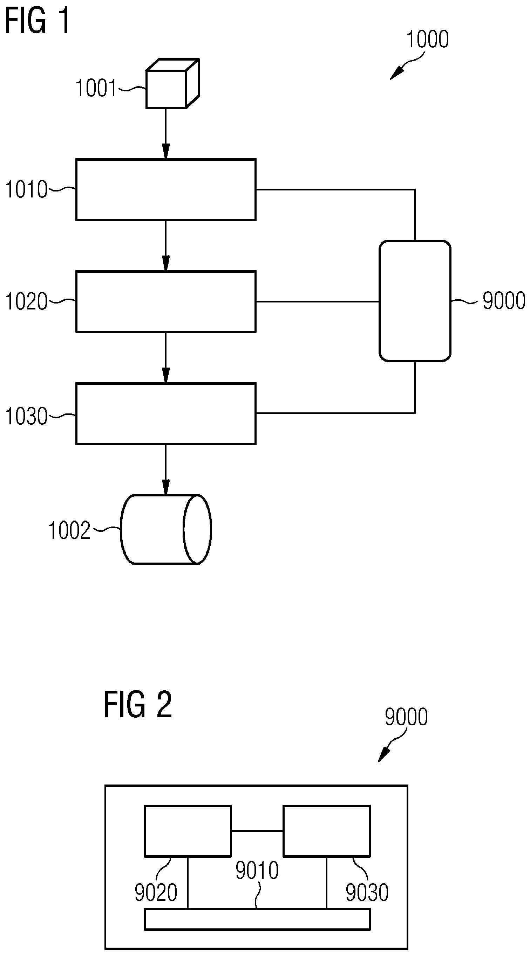

An exemplary system 1000 for a manufacturing process is illustrated in FIG. 1. The system 1000 includes multiple machines 1010, 1020, and 1030 for transforming raw materials 1001 into finished goods 1002.

These machines 1010, 1020, and 1030 may be controlled by a computing device 9000 for performing the manufacturing process. Each of the machines 1010, 1020, and 1030 may comprise one or more sensors (not shown in FIG. 1) for obtaining measurements of parameters associated with the manufacturing process, and the machines 1010, 1020, and 1030 may be respectively or collectively controlled based on the measurements of parameters associated with the manufacturing process. For example, the computing device 9000 may execute one or more software for processing the measurements of parameters associated with the manufacturing process and generate control information for each of the machines 1010, 1020, and 1030.

Alternatively or additionally, the system 1000 may comprise a database for storing the measurements of parameters associated with the manufacturing process and/or the control information generated for each of the machines 1010, 1020, and 1030.

According to various examples, the computing device 9000 may communicate with each of the machines 1010, 1020, and 1030 via wireless communication systems, e.g., Bluetooth, Wi-Fi, Global System for Mobile Communications (GSM), Universal Mobile Telecommunications System (UMTS), Long-Term Evolution (LTE) or 5G New Radio (NR). Any wired communication technologies can also be used in the system 1000.

According to various examples, the machines 1010, 1020, and 1030 may be controlled by a control system comprising multiple computing devices such as the computing device 9000. Each of the machines 1010, 1020, and 1030 may be respectively controlled by an individual computing device.

As a general rule, various kinds and types of manufacturing processes can be subject to the techniques disclosed herein, e.g., a steel hardening process, an instant coffee production process, a printed circuit board fabrication process, continuous manufacturing processes in chemical or pharmaceutical industry, production processes in food and beverage industry like beer brewing, cement production process, and rubber production process.

FIG. 2 is a block diagram of a computing device 9000 according to various examples. The computing device 9000 may comprise a processor 9020, a memory 9030, and an input/output interface 9010.

According to various examples, it is possible to output control data/information via the input/output interface 9010 to thereby control the machines 1010, 1020, and 1030 of a system for a manufacturing process such as the system 1000.
The input/output interface 9010 may include a human machine interface via which a user interface can be provided to a user, e.g., an engineer. The user interface could be, e.g., a graphical user interface such as a web-based user interface.

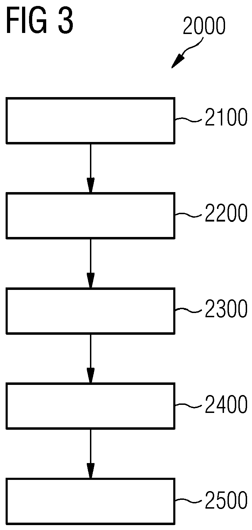

The processor 9020 is configured to load program code from the memory 9030 and execute the program code. Upon executing the program code, the processor 9020 performs techniques as disclosed herein. For instance, the processor 9020 can perform techniques as disclosed in connection with FIG. 3.

FIG. 3 is a flowchart of a method 2000 according to various examples. The method 2000 of FIG. 3 pertains to processing, using a machine learning algorithm, at least one time series associated with a manufacturing process. The manufacturing process may be performed by one or more machines, e.g., the machines 1010, 1020, and 1030 of the system 1000 of FIG. 1. For example, the method 2000 may be executed by a computing device such as the computing device 9000 of FIG. 1 or 2. The method 2000 may be executed by the processor 9020 upon loading program code from the memory 9030 and upon executing the program code. Details of the method 2000 are described in the following.

At block 2100: obtaining at least one time series associated with a manufacturing process.

According to various examples, the at least one time series may be associated with a steel hardening process. For example, the at least one time series may be associated with at least one of an actual carbon potential, a target carbon potential, an output voltage of an oxygen sensor, a temperature in a furnace zone, a temperature of the oxygen sensor, an atmosphere pressure, an actual batch runtime, a target batch runtime, and a carbon potential controller value.

According to various examples, the at least one time series associated with a manufacturing process may be obtained from a database or one or more sensors associated with one or more machines for performing the manufacturing process. For example, the at least one time series may be measurements of one or more sensors of the machines 1010, 1020, and 1030 of FIG 1.

Preferably, during a training process of the machine learning algorithm, the at least one time series, i.e., training data, may be obtained from a database. After deploying the trained machine learning algorithm, i.e., during an inference procedure, the at least one time series may be obtained from one or more sensors associated with one or more machines for performing the manufacturing process, e.g., in real-time. As such, the one or more machines for performing the manufacturing process can be controlled in real-time.

At block 2200: applying convolution operations to the at least one time series, and the convolution operations comprise at least one convolution block and each of the at least one convolution block comprises a convolution layer connecting to a pooling layer.

According to various examples, the convolution layer may be a 1D convolution layer, a 2D convolution layer, or a 3D convolution layer. The convolution layer may be implemented using the corresponding well-defined function in existing software libraries for machine learning and artificial intelligence, e.g., TensorFlow, PyTorch, Keras, scikit-learn, and Matlab. For example, the convolution layer may be implemented by functions of Keras, e.g., tf.keras.layers.Conv1D, tf.keras.layers.Conv2D, and/or tf.keras.layers.Conv3D.

According to various examples, the pooling layer may comprise a max pooling layer or an average pooling layer. The pooling layer may be a 1D pooling layer, a 2D pooling layer, or a 3D pooling layer. The pooling layer may be implemented using the corresponding well-defined function in existing software libraries for machine learning and artificial intelligence, e.g., TensorFlow, PyTorch, Keras, scikit-learn, and Matlab. For example, the pooling layer may be implemented by functions of Keras, e.g., tf.keras.layers.AveragePooling1D, tf.keras.layers.AveragePooling2D, tf.keras.layers.AveragePooling3D, tf.keras.layers.MaxPool1D, tf.keras.layers.MaxPool2D, and/or tf.keras.layers.MaxPool3D.

According to various examples, the at least one convolution block may comprise a first convolution block and a second convolution block. The first convolution block is fed with the at least one time series obtained at block 2100 and connects to the second convolution block.

According to various examples, the at least one convolution block may comprise a further first convolution block and a further second convolution block, and the first convolution block, the further first convolution block, the second convolution block, and the further second convolution block successively connect to each other.

According to various examples, the convolution layer of the first convolution block may comprise a first count of filters, and the convolution layer of the second convolution block may comprise a second count of filters. Preferably, the second count may be two times larger than the first count.

For example, the first count and the second count may be respectively 8 and 16.

In general, the first count and the second count may be determined depending on a specific manufacturing process.

According to various examples, each of the convolution blocks may further comprise an activation function following a respective convolution layer.

At block 2300: applying a global pooling layer to an output of the convolution operations.

According to various examples, the global pooling layer may comprise a global average pooling layer or a global max pooling layer. The global pooling layer may be a 1D global pooling layer, a 2D global pooling layer, or a 3D global pooling layer. The global pooling layer may be implemented using the corresponding well-defined function in existing software libraries for machine learning and artificial intelligence, e.g., TensorFlow, PyTorch, Keras, scikit-learn, and Matlab. For example, the global pooling layer may be implemented by functions of Keras, e.g.,
tf.keras.layers.GlobalAveragePooling1D,
tf.keras.layers.GlobalAveragePooling2D,
tf.keras.layers.GlobalAveragePooling3D,
tf.keras.layers.GlobalMaxPool1D,
tf.keras.layers.GlobalMaxPool2D, and/or
tf.keras.layers.GlobalMaxPool3D.

At block 2400: applying a linear operation block to an output of the global pooling layer, wherein the linear operation block comprises a linear operation layer connecting to an activation function.

According to various examples, the linear operation layer may apply one or more linear operators to the output of the global pooling layer, e.g., vector addition, scalar multiplication, and/or matrix multiplication.

According to various examples, the activation function may comprise any one of a rectified linear activation function, a Softmax activation function, a Tanh activation function, a leaky rectified linear activation function, a parametric rectified linear activation function, a sigmoid activation function. Each of the activation function may be implemented using the corresponding well-defined function in existing software libraries for machine learning and artificial intelligence, e.g., tf.keras.layers.PReLU, tf.keras.layers.ReLU, and/or tf.keras.layers.Softmax of Keras.

At block 2500: obtaining an estimate of at least one parameter associated with the manufacturing process based on an output of the linear operation block.

According to various examples, the estimate of the at least one parameter associated with the manufacturing process may be direct output of the linear operation block.

According to various examples, said obtaining of the estimate of the at least one parameter associated with the manufacturing process may comprise applying the output of the linear operation block to a further linear operation layer. I.e., the linear operation block may comprise the further linear operation layer. The further linear operation layer may apply one or more linear operators to the output of the activation function of the linear operation layer, e.g., vector addition, scalar multiplication, and/or matrix multiplication.

When the at least one time series is associated with a steel hardening process, the at least one parameter associated with the manufacturing process may comprise a grade of hardness of steel.

According to various examples, the at least one convolution block, the global pooling layer, and the linear operation block may respectively comprise parameters determined by training the machine learning algorithm.

According to the disclosure, various training methods of machine learning algorithms may be applied to train the machine learning algorithm, such as supervised learning, unsupervised learning, semi-supervised learning, reinforce learning and etc.

Preferably, the machine learning algorithm may be trained using training data based on supervised learning techniques. The training process can include determining a loss value based on a comparison between a prediction of the machine learning algorithm and a ground truth. A loss function can provide the loss value by performing the comparison. Based on the loss value, it is then possible to adjust the weights or parameters of the at least one convolution block, the global pooling layer, and the linear operation block, respectively. Here, an optimization algorithm, e.g., gradient descent, can be employed. Gradient descent is an exemplary learning rule on the basis of gradients from backpropagation.

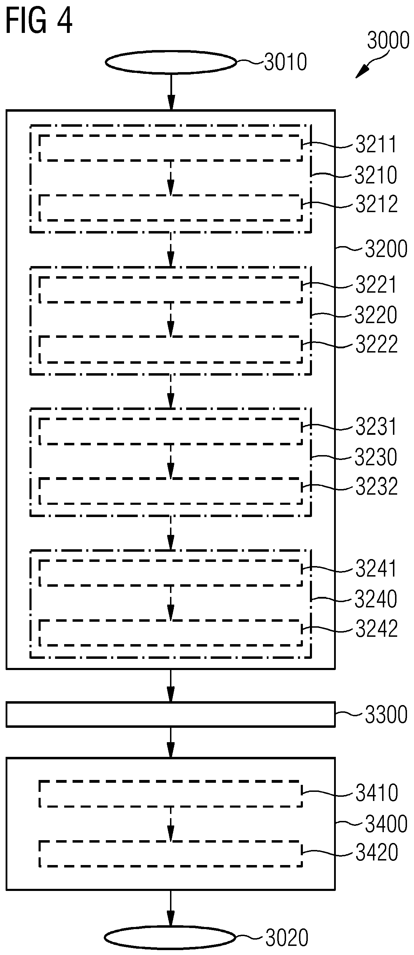

FIG. 4 is a flowchart of an exemplary architecture of a machine learning algorithm 3000 according to various examples.

The machine learning algorithm 3000 may take an n-variate time series 3010 with m timesteps as an input. For example, for some manufacturing processes, n may be any value from 100 to 200, and m may be dependent on a certain application, e.g., 50 or 100. For a steel hardening process, n may be selected from 10 to 20, and m may be selected from 1500 to 2500. The input 3010 may be processed by convolution operations 3200 including four convolution blocks 3210, 3220, 3230, and 3240. Each of the convolution blocks 3210, 3220, 3230, and 3240 may comprise a 1D convolution layer, i.e., convolution layers 3211, 3221, 3231, and 3241, respectively, and a max pooling layer, i.e., max pooling layers 3212, 3222, 3232, and 3242, respectively. The filter sizes of the convolution layers 3211, 3221, 3231, and 3241 and of the max pooling layers 3212, 3222, 3232, and 3242 may be 3 and 2, respectively. The strides of the convolution layers 3211, 3221, 3231, and 3241 and of the max pooling layers 3212, 3222, 3232, and 3242 may be 1 and 2, respectively. The convolution layers 3211 and 3221 may respectively comprise q filters and the convolution layers 3231 and 3241 may respectively comprise 2q filters. The number of filters q is a hyperparameter that can be tuned for a specific task and/or a specific manufacturing process. For example, q may be equal to 8 for a steel hardening process. The output of the convolution operations is a feature map with the dimension of 2q times m/16. A 1D global average pooling layer 3300 reduces the second dimension of the feature map. The output of the 1D global average pooling layer 3300 is a 2q-element (e.g., 16-element for the steel hardening process) feature vector. The feature vector is processed by a linear operation layer 3410 with a rectified linear activation function and 2q units followed by a second linear operation layer 3420 with k units. The linear operation layer 3410 with the rectified linear activation function and the second linear operation layer 3420 may be comprised in a linear operation block 3400. The number of units k in the second linear operation layer 3420 as well as the activation function of the linear operation layer 3410 may be task-specific. For example, k may be equal to 1 for steel hardening process.

The techniques disclosed herein, e.g., the method 2000 and the machine learning algorithm 3000, can facilitate precise processing of time series and thereby provide accurate and reliable prediction of one or more parameters associated with a manufacturing process. Every convolution layer is followed by a max pooling layer. This has the advantage that detailed events embedded in time series can be detected at any timestep while the time series is still downsampled along the time axis. The downsampling along the time axis ensures the machine learning algorithm with a small number of parameters and thus degrees of freedom. Distributing the downsampling evenly between the convolution layers has shown to be beneficial to maintaining a high performance of the machine learning algorithm while still reducing the complexity of the machine learning algorithm significantly. The lower complexity reduces the overfitting risk. The convolution layers automatically generate features of the time series across the time path of the unfolding and relate them to the target time series. It also solves the task of aggregating the signals over time, i.e., finding the best fitting time buckets (granularity) to solve specific tasks, e.g., prediction, classification, or regression. Therefore, the machine learning algorithm performs better than for example LSTM models alone on time series.

Although the disclosure has been shown and described with respect to certain preferred embodiments, equivalents and modifications will occur to others skilled in the art upon the reading and understanding of the specification. The present disclosure includes all such equivalents and modifications and is limited only by the scope of the appended claims.

For example, the techniques disclosed herein, e.g., the method 2000 and the machine learning algorithm 3000, can facilitate processing at least one time series associated with a steel hardening process, which has high-frequent with respect to time buckets and high-dimensional with respect to the count of variables. The quality of the steel, e.g., a grade of hardness of the steel, can be precisely and reliably predicted. The techniques disclosed herein may be superior to the conventional time series prediction methods, especially LSTM neural networks.

According to various examples, the techniques disclosed herein, e.g., the method 2000 and the machine learning algorithm 3000, may particularly facilitate processing time series with the following properties:
- The (high-frequent) time series comprises many observations/data points, e.g., more than 1,000.
- The important events embedded in the time series occur sparsely. Here, occurring sparsely means that the occurrence of important events is sparse compared to the whole-time span. I.e., the count of time points at which the important event occurs is much smaller than that of time points of the whole time series.
- The details of the important events are relevant while the exact time of important events is not relevant.

According to this disclosure, important events may be patterns in the time series that carry information that is necessary to predict the target variable(s). It is important to understand/model the temporal relationships, e.g., cause-effect resp. events and their impact on the time series of interest.

## Claims

1. A computer-implemented method (2000) for processing, using a machine learning algorithm (3000), at least one time series (3010) associated with a manufacturing process, the method comprising:
- obtaining (2100) the at least one time series (3010);
- applying (2200) convolution operations (3200) to the at least one time series (3010), wherein the convolution operations (3200) comprise at least one convolution block (3210, 3220, 3230, 3240) and each of the at least one convolution block (3210, 3220, 3230, 3240) comprises a convolution layer (3211, 3221, 3231, 3241) connecting to a pooling layer (3212, 3222, 3232, 3242);
- applying (2300) a global pooling layer (3300) to an output of the convolution operations (3200);
- applying (2400) a linear operation block (3400) to an output of the global pooling layer (3300), wherein the linear operation block (3400) comprises a linear operation layer (3410) connecting to an activation function;
- obtaining (2500) an estimate (3020) of at least one parameter associated with the manufacturing process based on an output of the linear operation block (3400).

2. The computer-implemented method (2000) of claim 1,
wherein the at least one time series is associated with a steel hardening process and the at least one parameter associated with the manufacturing process comprises a grade of hardness of steel.

3. The computer-implemented method (2000) of claim 1 or 2,
wherein the at least one convolution block comprises a first convolution block and a second convolution block.

4. The computer-implemented method (2000) of claim 3,
wherein the at least one convolution block comprises a further first convolution block and a further second convolution block, and the first convolution block, the further first convolution block, the second convolution block, and the further second convolution block successively connect to each other.

5. The computer-implemented method (2000) of claim 3 or 4,
wherein the convolution layer of the first convolution block comprises a first count of filters, and the convolution layer of the second convolution block comprises a second count of filters.

6. The computer-implemented method (2000) of claim 5,
wherein the second count is two times larger than the first count.

7. The computer-implemented method (2000) of claim 5 or 6,
wherein the first count and the second count are respectively 8 and 16.

8. The computer-implemented method (2000) of any one of the preceding claims,
wherein said obtaining of the estimate of the at least one parameter associated with the manufacturing process comprises:
- applying the output of the linear operation block to a further linear operation layer.

9. The computer-implemented method (2000) of any one of the preceding claims,
wherein the activation function comprises any one of a rectified linear activation function, a Tanh activation function, a leaky rectified linear activation function, a parametric rectified linear activation function, a sigmoid activation function.

10. The computer-implemented method (2000) of any one of the preceding claims,
wherein the at least one convolution block, the global pooling layer, and the linear operation block respectively comprise parameters determined by training the machine learning algorithm.

11. The computer-implemented method (2000) of any one of the preceding claims,
wherein the pooling layer comprises a max pooling layer or an average pooling layer.

12. The computer-implemented method (2000) of any one of the preceding claims,
wherein the global pooling layer comprises a global average pooling layer or a global max pooling layer.

13. A computing device (9000), the computing device (9000) comprising a processor (9020) and a memory (9030), wherein upon loading and executing program code from the memory (9030), the processor (9020) is configured to perform the method (1000) of any one of the preceding claims.

14. A computer program product or a computer program or a computer-readable storage medium includes program code being executed by at least one processor (9020), wherein upon executing the program code, the at least one processor (9020) is configured to perform the method according to any one of claims 1 to 12.
